# EUROPEAN PATENT APPLICATION

(11) **EP 0 926 045 A2**
(43) Date of publication of application: **30.06.1999**
(21) Application number: 98123755.5
(22) Date of filing: 14.12.1998
(51) Int. Cl.: B62D 7/14

(54) **Steering system in a traveling vehicle**

(30) Priority: 15.12.1997 JP 34527597; 19.03.1998 JP 7051298
(71) Applicant: KABUSHIKI KAISHA KOBE SEIKO SHO also known as Kobe Steel Ltd., Kobe 651-0072 (JP)
(72) Inventor: Miyazawa, Hiroshi, Okubo Plant in Kobe Steel, Ltd., Akashi-shi, Hyogo, 674-0063 (JP); Saotome, Yoshimi, Okubo Plant in Kobe Steel, Ltd., Akashi-shi, Hyogo, 674-0063 (JP)
(74) Representative: Pellmann, Hans-Bernd, Dipl.-Ing.

(57) **Abstract**

It is intended to enhance a rectilinear restoring performance and thereby facilitate operation of a steering wheel. An upper rotating body provided with a driver's cab having a steering wheel 40 is mounted on a lower travel body having wheels 65a and 65b. A steering unit 41 operates in proportion to a steering angle of the steering wheel 40. An upper steering cylinder portion 45 is disposed in the upper rotating body and is actuated by the steering unit 41. A lower steering cylinder portion 57 is disposed in the lower travel body to change the steering angle of wheels 65a and 65b. The upper and lower steering cylinder portions 45, 57 are connected together by oil passages through a rotary joint 73 which is disposed at a rotational center of the upper rotating body, to constitute a closed circuit 100. According to this construction, a rectilinear restoring force which the wheels 65a and 65b undergo during vehicular traveling can be transmitted to the steering wheel 40.

## Description

### BACKGROUND OF THE INVENTION

### Field of the Invention:

The present invention relates to a steering system in a traveling vehicle wherein operations for travel are performed in a rotatable upper rotating body. Particularly, the invention is concerned with a wheel type construction machine such as a wheel crane or a wheel excavator in which a driver's cab for performing operations for travel is formed in a rotatable upper rotating body and in which traveling wheels are provided on a lower travel body.

### Description of the Related Art:

Generally, in an ordinary type of a truck or a small-bed vehicle, an integral type power steering unit connected to a steering wheel is connected to each front wheel through a mechanical link mechanism including an arm and a drag link. In this construction, an operation of the steering wheel is transmitted to the front wheels by the mechanical link mechanism although it is power-assisted hydraulically. On the other hand, alter the operation of the steering wheel, a rectilinear restoring force which undergoes the front wheels is transmitted to the steering wheel by the mechanical link mechanism, so that the steering wheel tries to return to its neutral position (rectilinear position) automatically.

However, in such a traveling vehicle as a wheel crane or a wheel excavator in which a driver's cab for performing operations for travel is formed in an upper rotating body and in which traveling wheels are located on a lower travel body, it is impossible to provide a mechanical link unlike ordinary types of trucks and small-sized vehicles, because the upper rotating body rotates.

Therefore, in a conventional wheel crane or wheel excavator, by means of a steering unit, a hydraulic oil of a high pressure proportional to the amount of operation of a steering wheel is fed to the lower travel body through a rotary joint disposed at a rotational center of the upper rotating body, thereby driving a steering cylinder disposed in the lower travel body to steer the front wheels.

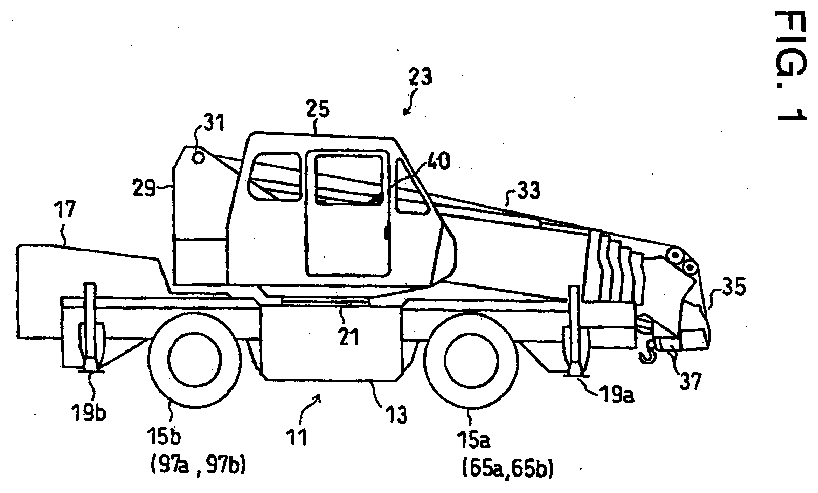

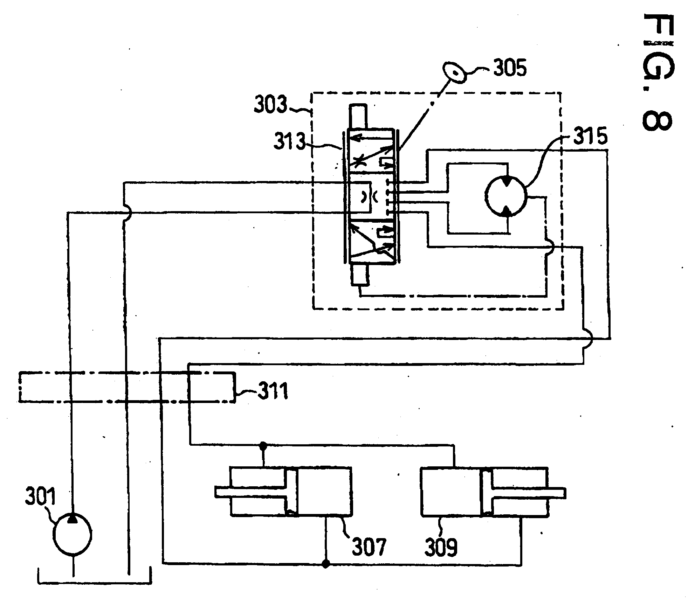

FIG. 8 shows an example in which the above conventional steering system is applied to a wheel crane. In the same figure there schematically illustrated only a principal portion of FIG. 1 in Japanese Patent Publication No. 8940/90.

In FIG. 8, the numeral 301 denotes a hydraulic pump which is driven by an engine. Hydraulic oil from the hydraulic pump 301 is fed to a steering unit 303, with a steering wheel 305 being connected to the steering unit 303. An internal structure of the steering unit 303 can be expressed schematically by such hydraulic reference marks as a servo valve 313 and a hydraulic motor 315. Output of the steering unit 303 is transmitted to a pair of steering cylinders 307 and 309, which in turn steer front wheels.

Numeral 311 denotes a rotary joint disposed at a rotational center of an upper rotating body. In the prior art shown in FIG. 8, the steering unit 303 and the steering handle 305 are disposed on the upper rotating body, while the hydraulic pump 301 and the steering cylinders 307, 309 are disposed on a lower travel body side, and upper and lower pipes connected to those components are connected together through the rotary joint 311.

However, according to the prior art described above, a rectilinear restoring force which the front wheels undergo is not transmitted, during vehicular traveling, to the steering wheel in the presence of a known wheel alignment mechanism, so that the steering wheel does not try to return to its neutral position (rectilinear position) automatically.

The point just mentioned above will now be explained with reference to the prior art shown in FIG. 8. The steering cylinders 307 and 309 with the rectilinear restoring force of the front wheels transmitted thereto try to discharge a hydraulic oil toward the steering unit 303. But the steering unit 303 returns automatically to its neutral position after operation of the steering wheel, in which neutral position the discharged hydraulic oil is blocked, so that the rectilinear restoring force which the front wheels undergo is not transmitted to the steering wheel 305.

For this reason, the driver of such a traveling vehicle as a wheel crane has so far been required to visually return the steering wheel to the neutral position after turning the steering wheel along a curve. In other words, traveling vehicles such as wheel cranes and the like are inferior in rectilinear restoring performance and steering has been difficult in those vehicles.

This poses a problem particularly at the time of changing lane which requires a quick steering. Sometimes a wheel crane or the like becomes shaky at the time of changing lane. This sometimes results in the drivers of nearby vehicles being given a feeling of fear because the wheel crane or the like is not only of a special traveling characteristic but also is a large-sized vehicle.

For the above reasons, the conventional wheel crane or the like is not easy to steer and hence it takes much time to master the driving technique and a special driving skill is required In other words, a driving technique different markedly from that of the ordinary type of traveling vehicles such as trucks is required

### SUMMARY OF THE INVENTION

In view of the aforesaid points, the present invention provides a steering system in a traveling vehicle superior in rectilinear restoring performance and easy to steer despite the traveling vehicle being of a construction in which wheels provided on a lower travel body are operated from a driver's cab provided on an upper rotating body.

According to the present invention there is provided a steering system in a traveling vehicle including a lower travel body having wheels, a rotatable upper rotating body carried on the lower travel body and having a driver's cab provided with a steering wheel, and a steering unit which amplifies an operating force of the steering wheel and transmits the amplified operating force as a steering force to the wheels, the steering system being characterized in that:
(i) the upper rotating body is provided with an upper hydraulic actuator which operates in accordance with operation of the steering wheel;
(ii) the lower travel body is provided with a lower hydraulic actuator for changing a steering angle of the wheels;
(iii) the upper and lower hydraulic actuators are connected together by oil passages through a rotary joint disposed at a rotational center of the upper rotating body to constitute a closed circuit; and
(iv) a rectilinear restoring force which the wheels undergo during vehicular traveling can be transmitted to the steering wheel by virtue of an oil pressure in the closed circuit and through the steering unit.

According to this construction, since the rectilinear restoring force which the wheels undergo is transmitted to the steering wheel through the oil pressure in the closed circuit, the steering wheel alter steering tries to return to its neutral position automatically as in ordinary types of vehicles such as trucks. Thus, a high rectilinear restoring performance is attained and steering is easy. Besides, it is not likely that the vehicle will become shaky at the time of changing lane.

The upper and lower hydraulic actuators may be upper and lower steering cylinder portions, respectively.

At least one of the upper and lower steering cylinder portions may be constituted by a double-rod type double acting cylinder.

In this case, the number of cylinders can be reduced and the steering system can be constituted in a simple and inexpensive manner.

At least one of the upper and lower steering cylinder portions may be constituted by a pair of single-rod type double acting cylinders.

In this case, there are less restrictions on the arrangement of components than in adopting a double-rod type double acting cylinder and therefore the arrangement of components becomes easier.

At least one of the upper and lower steering cylinder portions may be constituted by a pair of single-rod type single acting cylinders.

Preferably, a reverse steering valve portion for changing over from one combination to another of the interconnected upper and lower steering cylinder portions is disposed in the oil passages included in the closed circuit.

With such a reverse steering valve portion, it is possible to change the steering direction relative to rotation of the steering wheel, so that steering becomes easy at the time of travel with the upper rotating body facing backward.

Preferably, the steering system includes a pressure detecting means connected to the closed circuit and a abnormal condition detecting means which judges that there exists an abnormal condition when the pressure detecting means has detected a predetermined pressure.

The abnormal condition detecting means may be constructed so as to issue an alarm when the detected pressure is below a preset warning reference value.

According to this construction, the pressure of the dosed circuit is monitored by the abnormal condition detecting means and when it has dropped due to internal oil leakage for example, this abnormal condition can be detected to indicated to the vehicle driver.

Consequently, the occurrence of a trouble in steering caused by a drop in pressure of the closed circuit can be prevented and it is thereby possible to enhance the safety.

Particularly, if the warning reference value is set at a value which indicates a small pressure drop caused by internal oil leakage or contraction of oil, even such a small pressure drop can be clearly indicated to the vehicle driver in terms of an alarm.

Alternatively, if the warning reference value is set at a value which indicates a large pressure drop caused by leakage of a large amount of oil ascribable to breakage of a hose or hose connecting fittings, such a large pressure drop, which would lead to an unsteerable condition, can be indicated to the vehicle driver to ensure safety.

Further, the steering system may be provided with an oil replenishing means for replenishing the dosed circuit with oil.

As the oil replenishing means, an oil replenishing circuit is connected to the closed circuit, the oil replenishing circuit including a hydraulic pump for the replenishment of oil and a check valve also for the replenishment of oil which check valve permits only the flow of oil flowing from the hydraulic pump toward the dosed circuit.

According to this construction, oil can be replenished by the oil replenishing means (oil replenishing circuit) upon leakage of a small amount of oil, so that not only such an abnormal condition can be indicated but also it is possible to maintain the required steering function.

In this case, an accumulator may be disposed between the hydraulic pump and the oil replenishing check valve in the oil replenishing circuit. By monitoring the pressure of the accumulator, it is possible to detect an abnormal condition in pressure of the closed circuit in a more accurate manner.

Further, an auxiliary check valve for checking the flow of oil flowing from the accumulator side to the hydraulic pump side may be disposed upstream of the accumulator, whereby it is possible to monitor and indicate an abnormal pressure condition even when an engine (the hydraulic pump) is OFF. Consequently, it becomes possible to make inspection before travel and hence enhance the safety to a greater extent.

Further, a control valve adapted to change over between an open position permitting the flow of oil in the oil replenishing circuit and a cut-off position blocking the said oil flow may be disposed between the hydraulic pump and the accumulator in the oil replenishing circuit.

According to this construction, by setting the control valve at the cut-off position during pressure monitor, it is possible to block the flow of oil into the accumulator and detect a change in pressure of the accumulator more accurately.

In this case, if there is adopted a construction such that the control valve (solenoid valve) is set at the open position upon drop of the detected pressure to a level below the oil replenishing reference value, there are automatically conducted both the replenishment of oil upon leakage of a small amount of oil and the return of the control valve to the cut-off position after the replenishment of oil.

A restriction may be formed on an inlet side of the accumulator, whereby a rise in pressure of the accumulator is performed in a gentle manner and hence it is possible to control the accumulator pressure easily and accurately.

According to the above construction, in the upper rotating type traveling vehicle, the straight-ahead restoring force which the steering wheel undergoes is transmitted to the steering wheel through a static oil pressure in the closed circuit, whereby the rectilinear traveling performance is ensured.

Further, by providing a neutral reset means for resetting the steering wheel to a neutral position, the steering wheel after steering is surely returned to the neutral position by virtue of the neutral reset means.

In this case, if a hydraulic cylinder (a neutral reset cylinder) is used as the neutral reset means, it is possible to incorporate the said cylinder into a steering hydraulic circuit and easily ensure a power source (oil pressure source) therefor. That is, it is not necessary to provide any additional power source separately.

As the neutral reset cylinder, if there is used a cylinder provided with double-side free pistons and a rod which performs the transfer of force between the free pistons, cylinder equipment can be simplified and small-bed in comparison with using a pair of cylinders for pushing and pulling respectively.

Further, in the above construction, there may be used a neutral reset valve adapted to change over between a position at which oil chambers in the upper and lower steering cylinder portions are communicated with a tank and a position at which the said communication is cut off.

As the neutral reset valve there may be used an electromagnetic change-over valve.

The electromagnetic change-over valve may be constructed so as to be actuated by operation of a neutral reset switch which is disposed in a driver's cab.

According to the above construction, in the event there should occur a deviation in position of the steering wheel due to internal leak developed in each steering cylinder or the rotary joint, the oil chamber in each steering cylinder is brought into communication with a tank to create a condition of equal pressure by operation of the neutral reset valve and in this state the neutral reset means is operated, whereby the steering wheel can be reset to its neutral position.

As a result, not only the rectilinear traveling performance can be maintained but also it is possible to prevent a decrease in effective stroke (wheel steering angle) of each cylinder and ensure the turning ability in traveling of the vehicle.

In this case, if an electromagnetic change-over valve is used as the neutral reset valve, the vehicle driver can freely cause the neutral resetting function for the steering wheel to be fulfilled because the electromagnetic change-over valve can be remote-controlled with a switch.

Particularly, if there is adopted such that the electromagnetic change-over valve as the neutral reset valve is operated by operation of a neutral reset switch disposed within the driver's cab, the neutral resetting function for the steering wheel can be fulfilled by operating the neutral reset switch in the cab upon detection of a deviation in neutral position of the steering wheel.

The upper and lower hydraulic actuators may be upper and lower hydraulic motors, respectively.

According to this construction, upon operation of the steering wheel, the upper hydraulic motor rotates in the dosed circuit and fulfills pumping action to discharge oil in an amount proportional to the amount of operation of the steering wheel. The oil thus discharged from the upper hydraulic motor is fed to the lower hydraulic motor, which in turn rotates to drive the steering unit In this way the wheels are steered.

On the other hand, the rectilinear restoring force which the wheels undergo during vehicular traveling is transmitted to the lower hydraulic motor through the steering unit, which motor then performs a pumping action to rotate the upper hydraulic motor, whereby the said rectilinear restoring force is transmitted to the steering wheel.

As a result, the steering wheel after steering returns automatically to its neutral position as is the case with ordinary types of traveling vehicles.

Thus, despite the construction wherein the wheels on the lower travel body side are operated from the driver's cap on the upper rotating body side, a rectilinear restoring performance is attained to facilitate steering.

Besides, since the upper and lower hydraulic motors are used on the input side of the steering unit which input side is much smaller in torque than the output side, a small motor capacity will do. Consequently, not only the steering system can be reduced in size but also the return of the steering wheel is ensured because of a low transfer resistance of the rectilinear restoring force.

### BRIEF DESCRIPTION OF THE DRAWINGS

FIG. 1 is a side view of a wheel crane as an example of a traveling vehicle to which the present invention is applied;
FIG. 2 is a hydraulic circuit diagram showing principal portions of the first embodiment of the present invention conceptually;
FIG. 3 is a hydraulic circuit diagram showing a concrete example of the first embodiment;
FIG. 4 is a sectional view showing an example of a neutral cylinder used in the first embodiment;
FIG. 5 is a hydraulic circuit diagram showing principal portions of the second embodiment of the present invention conceptually;
FIG. 6 is a hydraulic circuit diagram showing principal portions of the third embodiment of the invention conceptually;
FIG. 7 is a hydraulic circuit diagram showing principal portions of the fourth embodiment of the invention;
FIG. 8 is a hydraulic circuit diagram of a conventional steering system; and
FIG. 9 is a hydraulic circuit diagram showing principal portions of the fifth embodiment of the invention conceptually.

### DETAILED DESCRIPTION OF THE PREFERRED EMBODIMENTS

Preferred embodiments of the present invention will be described hereinunder with reference to the drawings.

FIG. 1 is a side view of a wheel crane as an example of a traveling vehicle to which the present invention is applied.

In FIG. 1, the numeral 11 denotes a lower travel body. The lower travel body 11 mainly comprises a frame 13, a pair of front wheels 15a (65a, 65b) secured to the front portion of the frame 13, and a pair of rear wheels 15b (97a, 97b) secured to the rear portion of the frame 13. Centrally on the rear end of the frame 13 is mounted an engine box 17 with an engine (87) received therein. The engine in the engine box 17 serves as a power source for both traveling and craning. Two pairs of front and rear outriggers 19a, 19b are provided respectively on both sides of front and rear end portions of the frame 13.

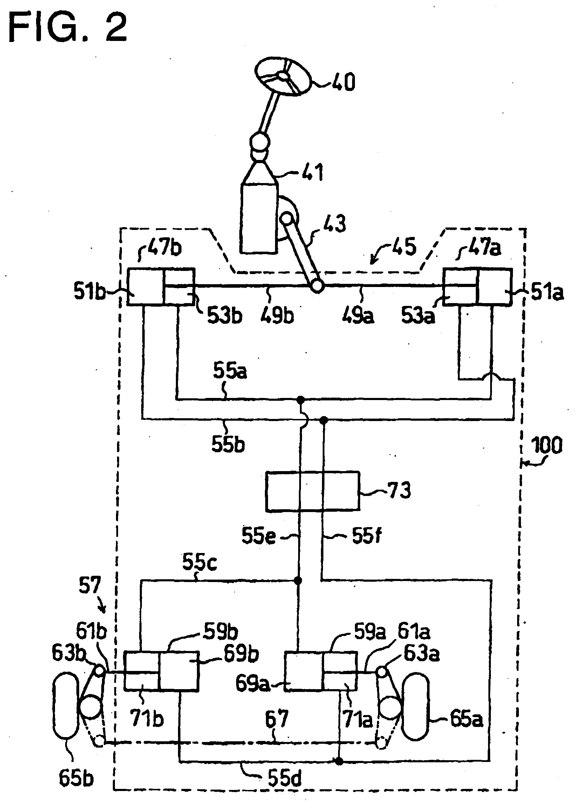

On the lower travel body 11 is mounted a upper rotating body 23 rotatably about a vertical axis through a rotary turret 21 which is centrally provided with such a rotary joint 73 as shown in FIG. 2.

On the right-hand portion of the upper rotating body 23 is disposed a driver's cab 25 having a steering wheel 40, while on the left-had portion thereof is disposed a boom 33 capable of rising and failing about a boom foot 31, the boom foot 31 being mounted at the upper end of a rotary frame 29. The boom 33 is a telescopic type boom capable of expansion and contraction, with a boom head 35 being secured to the tip of the boom 33. From the boom head 35 are suspended a pair of main and auxiliary hooks 37 to suspend goods.

FIG. 2 is a hydraulic circuit diagram showing conceptually principal portions of the first embodiment of the present invention.

As shown in FIG. 2, a steering unit 41 (toggle joint) is connected to a base portion of the steering wheel 40. The steering unit 41 is an integral type power steering unit and operates in accordance with operation of the steering wheel 40. This operation of the steering unit 41 is outputted as an operation of a link 43.

Although an integral type steering unit is used as a steering unit in the first embodiment shown in FIG. 2, no limitation is made thereto. A steering unit of another type, say, a booster type (linkage type), is also employable.

Numeral 45 denotes a upper steering cylinder portion. The upper steering cylinder portion 45 used in this first embodiment comprises a right upper steering cylinder 47a and a left upper steering cylinder 47b, whose rods 49a and 49b are connected together.

In this first embodiment, the right and left upper steering cylinders 47a and 47b are both double acting type single rod cylinders, which are of the same specification. An oil chamber 51a on the side opposite to the rod of the right upper steering cylinder 47a is connected to a oil chamber 53b on the rod side of the left upper steering cylinder 47b through a upper cylinder connecting oil passage 55a, while an oil chamber 51b on the side opposite to the rod of the left upper steering cylinder 47b is connected to an oil chamber 53a on the rod side of the right upper steering cylinder 47a through another upper cylinder connecting oil passage 55b.

The upper steering cylinder portion 45, the steering unit 41 and the steering wheel 40 are mounted on the upper rotating body 23 shown in FIG. 1.

Numeral 57 denotes a lower steering cylinder portion. The lower steering cylinder portion 57 used in this first embodiment comprises a right lower steering cylinder 59a and a left lower steering cylinder 59b.

A rod 61a of the right lower steering cylinder 59a is connected to the right front wheel 65a through a right front knuckle arm 63a. Likewise, a rod 61b of the left lower steering cylinder 59b is connected to the left front wheel 65b through a left front knuckle arm 63b. The right and left front knuckle arms 63a and 63b are connected together through a tie rod 67.

The right and left lower steering cylinders 59a, 59b used in this first embodiment are both double acting type single rod cylinders, which are of the same capacity as the right and left upper steering cylinders 47a, 47b. An oil chamber 69a on the side opposite to the rod of the right lower steering cylinder 59a is connected to a oil chamber 71b on the rod side of the left lower steering cylinder 59b through a lower cylinder connecting oil passage 55c, while a oil chamber 69b on the side opposite to the rod of the left lower steering cylinder 59b is connected to a oil chamber 71a on the rod side of the right lower steering cylinder 59a through another lower cylinder connecting oil passage 55d.

The lower steering cylinder portion 57 and the right and left front wheels 65a, 65b are mounted on the lower travel body 11 shown in FIG 1.

One upper and lower cylinder connecting oil passages 55a, 55c are connected together by a first upper-lower connecting oil passage 55e through a rotary joint 73 (swivel joint). The other upper and lower cylinder connecting oil passages 55b, 55d are connected together by a second upper-lower connecting oil passages 55f through a rotary joint 73.

In this first embodiment, a closed circuit 100 is constituted by the two cylinders 51a, 51b which constitute the upper steering cylinder portion 45 and the two cylinders 59a, 59b which constitute the lower steering cylinder portion 57. A static oil pressure generated in the upper steering cylinder portion 45 is transmitted to the lower steering cylinder portion 57. Conversely, a static oil pressure generated in the lower steering cylinder portion 57 is transmitted to the upper steering cylinder portion 45.

In this first embodiment, a sealing pressure is applied to the closed circuit 100 which connects together the upper and lower steering cylinders portions 45, 57.

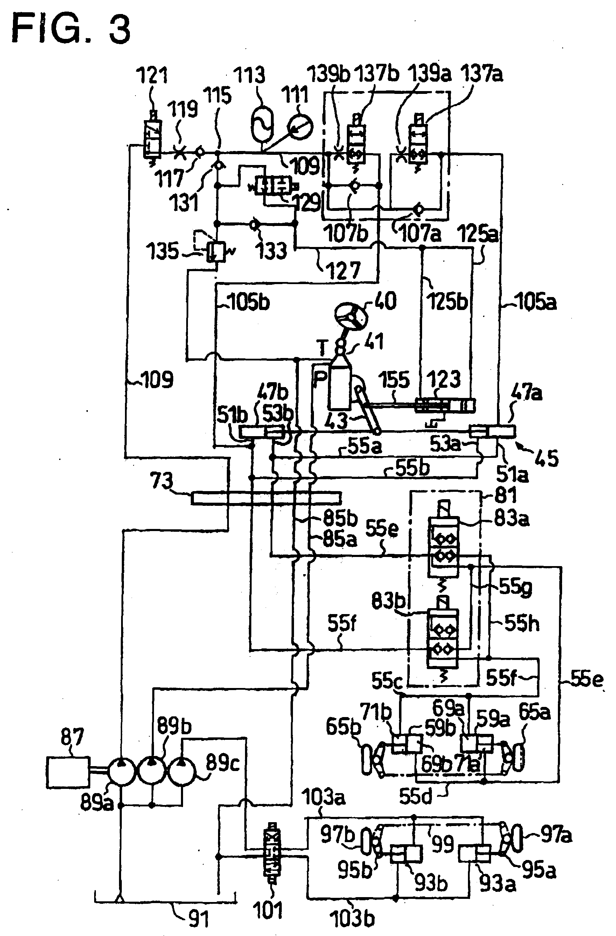

Although the closed circuit 100 is illustrated as a complete dosed circuit in FIG. 2, the "closed circuit" as referred to herein is not always required to be a complete closed circuit. It suffices if only it can transmit a rectilinear restoring force which the front wheels undergo during vehicular traveling to the steering wheel through a hydraulic pressure. An additional component such as a relief valve for preventing an abnormal rise of pressure may be attached to the closed circuit. Further, there may be adopted such a construction as shown in FIG. 3, wherein a hydraulic circuit or the like for a additional supply of hydraulic oil is connected to the dosed circuit, which circuit becomes a incomplete closed circuit where required.

Although the upper steering cylinder portion 45 in this first embodiment is composed of the right and left upper steering cylinders 47a, 47b whose rods 49a and 49b are connected together, it is not always necessary to connect the rods with each other. For example, the rods may each be pushed ad pulled by the link of the steering unit without direct connection of the rods. Alternatively, a mechanical part may be interposed between both rods.

Now, the operation of the hydraulic circuit shown in FIG. 2 will be described.

First, when the steering wheel 40 is turned clockwise, this motion is transmitted through the steering unit 41 to the link 43, which in turn pushes the rod 49a of the right upper steering cylinder 47a rightward and at the same time pulls the rod 49b of the left upper steering cylinder 47b in the same direction. As a result, hydraulic oil is discharged from the oil chamber 51a on the side opposite to the rod of the right upper steering cylinder 47a and also from the oil chamber 53b on the rod side of the left upper steering cylinder 47b. The hydraulic oil thus discharged is fed to the oil chamber 69a on the side opposite to the rod of the right lower steering cylinder 59a and the oil chamber 71b on the rod side of the left lower steering cylinder 59b via the upper cylinder connecting oil passage 55a, the first upper-lower connecting oil passage 55e and the lower cylinder connecting oil passage 55c. As a result, the right and left lower steering cylinders 59a, 59b operate rightward, whereby the right and left front wheels 65a, 65b are turned to the right.

At this time, the hydraulic oil present in the oil chamber 71a on the rod side of the right lower steering cylinder 59a and the hydraulic oil in the oil chamber 69b on the side opposite to the rod of the left lower steering cylinder 59b are discharged to the lower cylinder connecting oil passage 55d by operation of the right and left lower steering cylinders 59a, 59b. The thus-discharged and combined hydraulic oil flows through the second upper-lower connecting oil passage 55f and the upper cylinder connecting oil passage 55b and is fed to the oil chamber 53a on the rod side of the right upper steering cylinder 47a and the oil chamber 51b on the side opposite to the rod of the left upper steering cylinder 47b

On the other hand, when the steering wheel is turned counterclockwise, the components operate in the direction opposite to the direction in which they operate in the clockwise rotation of the steering wheel, whereby the right and left front wheels 65a, 65b are turned to the left.

In this first embodiment, since the right and left upper steering cylinders 47a, 47b and the right and left lower steering cylinders 59a, 59b are of the same capacity, the amounts of hydraulic oils delivered from the upper and lower steering cylinder portions 45, 57 are almost equal to each other.

However, it is not always necessary that the cylinder capacities of the upper, lower, right and left steering cylinders 47a, 47b, 59a, 59b be made completely the same. They may be somewhat different.

As to the upper and lower steering cylinders, their pressure receiving areas may be changed. In this case, the ratio between steering wheel turn angle and steering turn angle differs. To be more specific, if the pressure receiving area of the upper steering cylinder is set smaller than that of the lower steering cylinder, the steering turn will become smaller, while conversely if the pressure receiving area of the lower steering cylinder is set smaller than that of the upper steering cylinder, the steering turn becomes larger.

FIG. 3 is a hydraulic circuit diagram showing a concrete example in the first embodiment of the invention. In both FIGS. 2 and 3 the components identified by like reference numerals are of the same constructions respectively, so explanations thereof are here omitted.

Hallway of the first and second upper-lower connecting oil passages 55e, 55f which connect the upper and lower steering cylinder portions 45, 57, there is disposed a reverse steering valve portion 81, which comprises a pair of right reverse steering valve 83a and left reverse steering valve 83b. The reverse steering valves 83a and 83b are each a electromagnetic change-over valve of a 3-port 2-position type having a non-leak position. A free position-side port of the right reverse steering valve 83a and a non-leak position-side port of the left reverse steering valve 83b are connected together through a change-over oil passage 55g. Likewise, a free position-side port of the left reverse steering valve 83b and a non-leak position-side port of the right reverse steering valve 83a are connected together through a change-over oil passage 55h.

It is optional whether the reverse steering valve portion 81 is to be provided on the upper rotating body side or on the lower travel body side with respect to the rotary joint 73.

In this first embodiment, the right and left reverse steering valves 83a, 83b are changed over at a time by operating a forward-reverse steering change-over switch disposed in the driver's cab. By this change-over of the reverse steering valves 83a and 83b the steering direction of the right and left front wheels 65a, 65b relative to rotation of the steering wheel is changed, whereby the operability can be improved during vehicular traveling with the upper rotating body facing backward.

Although in this first embodiment, the reverse steering valve portion 81 is provided for creating a reverse steering function, it is not always necessary to use the reverse steering valve portion 81 if the said function is not needed.

Hydraulic oil for actuating a rotary valve and a power piston is fed to and discharged from the integral type steering unit 41 through a pump-side oil passage 85a and a tank-side oil passage 85b. The oil passages 85a and 85b are each connected to one of three-throw hydraulic pumps 89a-89c and a tank 91 through the rotary joint 73. The three-throw hydraulic pumps 89a-89c are driven by the engine 87 mounted within the engine box 17.

Further, the hydraulic pump 89c, which is one of the three-throw hydraulic pumps, and the tank 91 are connected to right and left steering cylinders 93a, 93b for rear wheels by a pair of rear wheel oil passages 103a and 103b through a rear wheel actuating valve 101 which is an electromagnetic change-over valve of a 4-port 3-position type. Rods of the right and left steering cylinders 93a, 93b for rear wheels are connected to right and left rear wheels 97a, 97b through right and left rear knuckle arms 95a, 95b.

The rear wheel actuating valve 101 is changed over its position by operating a rear wheel actuating switch which is disposed in the driver's cab, to steer the right and left rear wheels 97a, 97b in the same direction. By turning the rear wheels 97a and 97b in the direction opposite to the front wheels 65a and 65b it is made possible to reduce the minimum turning radius, while by turning them in the same direction as the front wheels it is possible to perform a crab-like traveling.

The following description is now provided about portions relating to a abnormal condition detecting means and an oil replenishing means both used in the first embodiment.

The amount of hydraulic oil in the dosed circuit 100 which connects the upper and lower steering cylinder portions 45, 57 sometimes decreases due to, for example, oil leakage or contraction of oil caused by a drop of oil temperature. In the event of occurrence of such a decrease in the amount of oil, if no countermeasures are taken, there increases the amount of so called "play" in which condition it is impossible to effect steering even if the steering wheel is turned Such an increase of "play" may result in that it is difficult to keep the rectilinear traveling performance or difficult to perform a lane changing operation. If the amount of oil further decreases to a large extent, there may occur a case where steering does not respond at all to a turning of the steering wheel. To prevent the occurrence of such a problem, both abnormal condition detecting means and oil replenishing means are provided in the first embodiment

A branching oil passage 105a is connected to the oil chamber 51a on the side opposite to the rod of the right upper steering cylinder 47a and another branching oil passage 105b is connected to the oil chamber 51b on the side opposite to the rod of the left upper steering cylinder 47b. Check valves 107a and 107b are disposed in the branching oil passages 105a and 105b respectively to permit only the flow of oil advancing into the oil chamber 51a or 51b on the side opposite to the rod. These two branching oil passages 105a and 105b join into a single oil passage 109 for the replenishment of oil. A pressure gauge 111 (pressure detecting means) and an accumulator 113 are connected to the oil replenishing passage 109. The oil replenishing passage 109 reaches the hydraulic pump 89a via an oil replenishing check valve 117, an oil replenishing restriction 119 and a oil replenishing solenoid valve 121.

Reference will first be made to the abnormal condition detecting means. In this first embodiment, the pressure of the closed circuit 100 is detected by the pressure gauge 111 on an upstream side of the oil replenishing check valve 117. If there is no leakage of oil from the closed circuit 100, the pressure detected by the pressure gauge 111 is almost equal to an outlet pressure of the hydraulic pump 89a. On the other hand, in the event of oil leakage from the closed circuit 100, there occurs a pressure loss and the pressure detected by the pressure gauge 111 so much decreases to a lower level than the outlet pressure of the hydraulic pump 89a. By detecting this pressure drop, it is possible to detect oil leakage or oil contraction (trouble) from the closed circuit 100. This abnormal condition detecting means is constituted by a electric control unit (controller) (not shown).

In the case where the abnormal condition detecting means has thus detected oil leakage or any other abnormal condition and if the amount of the resulting pressure drop is such a small amount (The detected pressure is above a abnormal condition detecting reference value) as is caused by the ordinary internal oil leakage for example, hydraulic oil is replenished by the oil replenishing means which will be described later. On the other hand, if the amount of leak oil is such a large amount (The detected pressure is below the abnormal condition detecting reference value) as is caused by, for example, loosening of hose fittings or breakage of pipe, an alarm is issued to advise the vehicle driver of the occurrence of an abnormal condition.

In this first embodiment, an accumulator 113 is connected downstream of the oil replenishing check valve 117. Therefore, oil leakage from the closed circuit 100 can be detected even with the engine 87 (hydraulic pump 89a) OFF.

In this first embodiment, as noted previously, the oil replenishing restriction 119 and the oil replenishing solenoid valve 121 are disposed upstream of the accumulator 113, and when the outlet pressre of the accumulator 113 detected by the pressure gauge 111 is lower than the predetermined oil replenishing reference value, the oil replenishing solenoid valve 121 is operated, causing the hydraulic oil to be replenished to the accumulator 113 from the hydraulic pump 89a. Since the hydraulic oil passes through the oil replenishing restriction 119, a rise in pressure of the accumulator 113 is gentle. Thus, an exact pressure control for the accumulator 113 can be effected.

The operation of the oil replenishing means will now be described. In this first embodiment, the accumulator 113 is connected upstream of the check valves 107a and 107b, so upon decrease in pressure of the closed circuit 100 to a lower level than the pressure of the accumulator 113, hydraulic oil is fed to the closed circuit 100 automatically from the accumulator 113. This decrease in pressure of the accumulator 113 is compensated for by replenishment from the hydraulic pump 89a upon actuation of the oil replenishing solenoid valve 121, as referred to above.

Now, a description will be given below of the portion relating to neutral reset means used in this first embodiment.

In the first embodiment being considered, a sliding resistance of cylinder is developed in the upper and lower steering cylinders 45, 57. Therefore, without neutral reset means, that is, with only the returning forces of the front wheels 65a and 65b, it is impossible for the steering wheel 40 to return to its neutral position and hence there is a fear that the rectilinear traveling performance may be deteriorated in comparison with trucks or the like.

Further, there occurs an internal leak from the upper steering cylinder portion 45 or the lower steering cylinder portion 57 or the rotary joint 73. Consequently, without neutral reset means, the neutral position of the steering wheel 40 will gradually shift from its rectilinear position and an effective cylinder stroke will become short, thus giving rise to a fear that the expected turning ability may no longer be exhibited or the rectilinear traveling performance may be deteriorated.

In view of the above-mentioned problems a neutral reset means is provided in this first embodiment. The construction of the neutral reset means will be described below.

In FIG. 3, a rod 155 of a neutral cylinder 123 is secured to the link 43 of the steering unit 41.

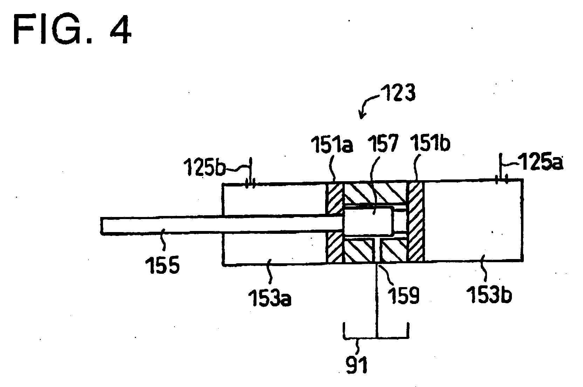

FIG. 4 is a sectional view showing an example of the neutral cylinder 123. The neutral cylinder 123 is provided with two left and right oil chambers 153a, 153b. Within the oil chambers 153a and 153b are disposed free pistons 151a and 151b respectively. Between both tree pistons 151a and 151b is disposed a main piston 157 of a rod 155. Neutral cylinder oil passages 125a and 125b are connected to the oil chambers 153a and 153b. An output port 159 is formed in the oil chamber in which the main piston 157 is disposed. With movement of the free pistons 151a and 151b, hydraulic oil is fed to the tank 91 through the output port 159.

Since the neutral cylinders 123 is supplied with hydraulic oil through the neutral cylinder oil passages 125a and 125b, both tree pistons 151a and 151b are pushed toward the center as in FIG. 4, whereby the main piston 157 is held under pressure therebetween and is centrally positioned

Turning again to FIG. 3, both neutral cylinder oil passages 125a and 125b join into a single confluent oil passage 127, which is connected to an oil replenishing oil passage 115 extending between the oil replenishing check valve 117 and the accumulator 113. A solenoid valve 129 and a check valve 131 are provided in the confluent oil passage 127. The check valve 131 permits only the flow of oil advancing toward the neutral cylinder 123. The confluent oil passage 127 branches between the solenoid valve 129 and the check valve 131, and this branched oil passage is connected to the tank oil passage 85a through a relief valve 135. Further, a check valve 133 is connected in parallel with the solenoid valve 129. The check valve 133 permits only the flow of oil flowing out of the neutral cylinder 123.

A series circuit of a neutral resetting solenoid valve 137a and a restriction 139a is provided in parallel with the check valve 107a disposed in the branching oil passage 105a. Likewise, a series circuit of a neutral resetting solenoid valve 137b and a restriction 139b is provided in parallel with the check valve 107b disposed in the branching oil passage 105b. Closed-side flow paths of the neutral resetting solenoid valves 137a and 137b are formed as non-leak paths in both directions.

Next, the operation of the neutral reset means used in the first embodiment will be described below.

In this first embodiment, a thrust of both free pistons 151a and 151b in the neutral cylinder 123 is exerted in addition to the rectilinear restoring force of the front wheels 65a and 65b. This thrust of the neutral cylinder 123 is induced by the pressure accumulated in the accumulator 113. If the thrust of the neutral cylinder 123 is larger than the sliding resistance of cylinder in the upper and lower steering cylinder portions 45, 57, it is possible to let the steering wheel 40 return to its neutral position. Even if the thrust of the neutral cylinder 123 is smaller than the said sliding resistance, it serves as a assistant force for returning the steering wheel 40 to its neutral position, so that the returning motion of the steering wheel 40 is improved in comparison with the case where the neural cylinder 123 is not used.

In this first embodiment, by actuating the neural resetting solenoid valves 137a and 137b, the four oil chambers 51a, 51b, 53a and 53b in the right and left upper steering cylinders 47a, 47b become equal in pressure. If the thrust of the neutral cylinder 123 is added in this state, the steering wheel 40 and the right and left upper steering cylinders 47a, 47b are aligned in their neutral positions.

For example, after the front wheels 65a and 65b have been adjusted to the rectilinear position visually, if the neutral reset switch mounted in the driver's cab is pushed to actuate the neutral resetting solenoid valves 137a and 137b, all of the steering wheel 40, right and left upper steering cylinders 47a, 47b and the right and left lower steering cylinders 59a, 59b are aligned neutral, whereby a deviation of the steering wheel from the rectilinear position caused by internal oil leakage for example can be corrected. Thus, there is no fear of a cylinder moving up to its stroke end which would make turning of the traveling direction impossible even with turning of the steering wheel.

A modification may be made such that operation of the front and rear outriggers 19a, 19b is detected and the neutral resetting operation is performed automatically while the front wheels 65a and 65b are floating from the ground under the operation of the outriggers.

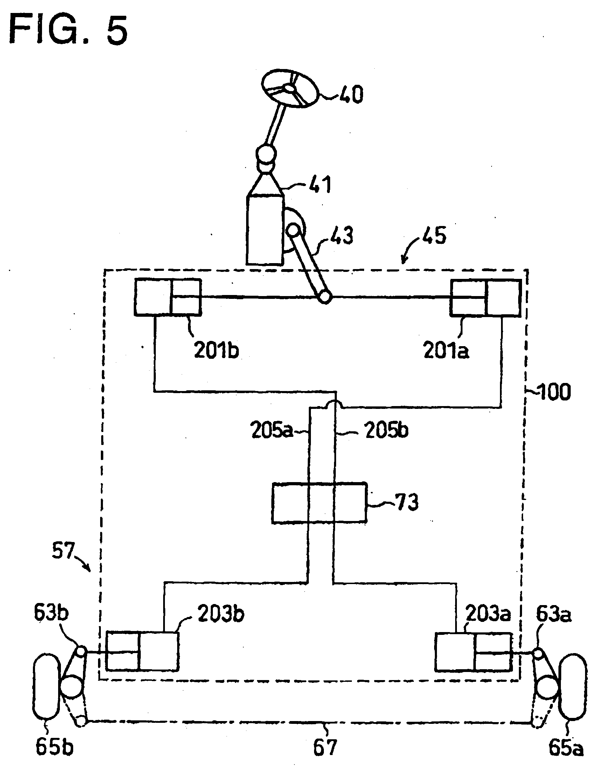

The second embodiment of the present invention will now be described. FIG. 5 is a hydraulic circuit diagram showing principal portions of the second embodiment conceptually, in which the components identified by the same reference numerals as in FIG. 2 are the same as in FIG. 2, so explanations thereof will here be omitted.

The second embodiment illustrated in FIG. 5 is different from the first embodiment illustrated in FIG. 2 in that single-rod type single acting cylinders 201a, 201b, 203a and 203b are used instead of single-rod type double acting cylinders as the cylinders in the upper and lower steering cylinder portions 45, 57. An opposite-to-rod-side oil chamber in a right upper steering cylinder 201a is connected to an opposite-to-rod-side oil chamber in a left lower steering cylinder 203b through an oil passage 205a with a rotary joint 73 disposed therein. Likewise, an opposite-to-rod-side chamber in a left upper steering cylinder 201b is connected to an opposite-to-rod-side oil chamber in a right lower steering cylinder 203a through an oil passage 205b with the rotary joint 73 disposed therein.

In this second embodiment, a dosed circuit 100 is constituted by the single-rod type single acting cylinders 201a, 201b, 203a, 203b and the oil passages 205a, 205b.

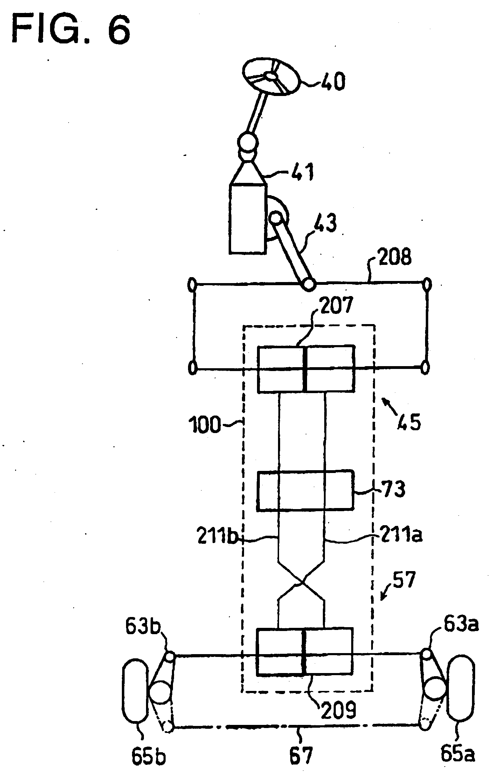

The third embodiment of the present invention will now be described. FIG. 6 is a hydraulic circuit diagram showing principal portions of the third embodiment conceptually. In the same figure, the components identified by the same reference numerals as in FIG. 2 are the same as in FIG. 2, so explanations thereof will here be omitted

In FIG. 6, what is different from the first embodiment illustrated in FIG. 2 resides in that cylinders 207 and 209, which are each a double-rod type single acting cylinder, are used instead of a pair of single-rod type double acting cylinders as the cylinders in the upper and lower steering cylinders 45, 57. A right-had oil chamber in an upper steering cylinder 207 is connected to a left-had oil chamber in a lower steering cylinder 209 through an oil passage 211a with a rotary joint 73 disposed therein. Likewise, a left-had oil chamber in the upper steering cylinder 207 is connected to a right-had oil chamber in the lower steering cylinder 209 through an oil passage 211b with the rotary joint 73 disposed therein. A rod of the upper steering cylinder 207 and a link 43 of a steering unit 41 are connected together through a link mechanism 208.

In this third embodiment, a closed circuit 100 is constituted by the double-rod type single acting cylinders 207, 209 and the oil passages 211a, 211b.

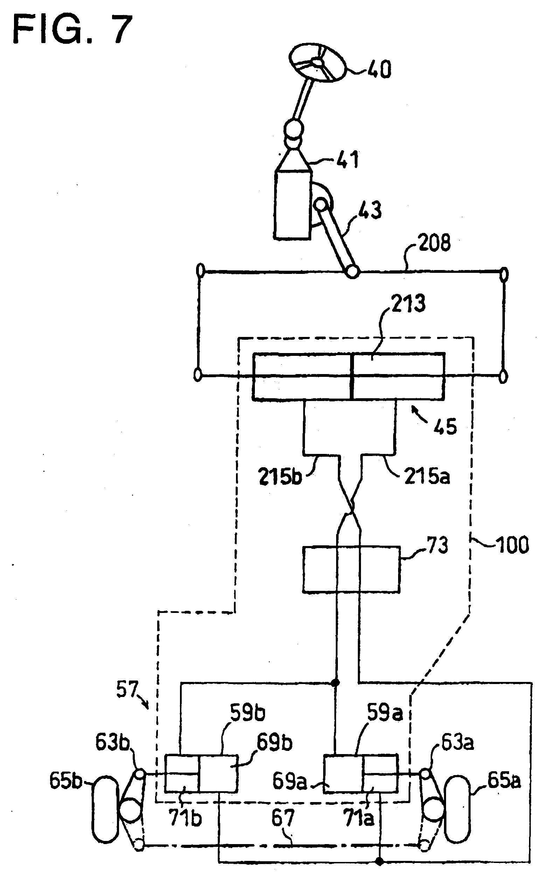

Lastly, the fourth embodiment of the present invention will now be described. FIG. 7 is a hydraulic circuit diagram showing principal portions of the fourth embodiment conceptually. In the same figure, the components identified by the same reference numerals as in FIG. 2 are the same as in FIG. 2, so explanations thereof will here be omitted.

In FIG. 7, what is different from the first embodiment illustrated in FIG. 2 consists in using one double-rod type single acting cylinder 213 in place of a pair of single-rod type double acting cylinders as the cylinders in the upper steering cylinder portion 45. A right-hand oil chamber in the upper steering cylinder 213 is connected to a lower steering cylinder portion 57 through an oil passage 215a with a rotary joint 73 disposed therein. Likewise, a left-hand oil chamber in the upper steering cylinder 213 is connected to the lower steering cylinder portion 57 through an oil passage 215b with the rotary joint 73 disposed therein.

In this fourth embodiment, a closed circuit 100 is constituted by the double-rod type single acting cylinder 213, single-rod type double acting cylinders 59a, 59b and oil passages 215a, 215b.

As in this fourth embodiment, different types of cylinders may be used in the upper and lower steering cylinder portions.

In the present invention, as set forth above, the upper steering cylinder portion actuated by a steering unit which operates in response to steering of the steering wheel is disposed on the upper rotating body, while the lower steering cylinder portion for changing the steering angle of wheels is disposed on the lower travel body, the upper and lower steering cylinder portions being connected with each other by oil passages through a rotary joint disposed at the rotational center of the upper rotating body, to constitute a closed circuit, whereby a rectilinear restoring force which the wheels undergo during vehicular traveling can be transmitted to the steering wheel through the oil pressure in the closed circuit.

According to the present invention, since a rectilinear restoring force which the wheels undergo is transmitted to the steering wheels, the steering wheel after steering tries to return automatically to its neutral position as is the case with ordinary types of vehicles such as trucks. Thus, there is attained an excellent rectilinear restoring performance and the steering wheel can be operated easily. Besides, the vehicle does not become shaky even at the time of changing lane. That is, even in such traveling vehicles having an upper rotating body as wheel cranes and wheel excavators, the drivers can drive the vehicles with similar feeling to that they have in trucks and the like. Such an extremely outstanding effect can be obtained.

According to the invention wherein at least one of the upper and lower steering cylinder portions is constituted by a double-rod type double acting cylinder, it is possible to reduce the number of cylinders and thereby constitute steering system in a simple and less expensive manner.

On the other hand, according to the invention wherein at least one of the upper and lower steering cylinder portions is constituted by a pair of single-rod type double acting cylinders, there are less restrictions on the arrangement of devices than in the adoption of a double-rod type double acting cylinder and thus the arrangement of devices becomes easier.

Further, according to the invention wherein a reverse steering valve portion for changing over from one combination to another of the interconnected upper and lower steering cylinder portions is disposed in the oil passages formed in the closed circuit, it is possible to change the steering direction relative to rotation of the steering wheel and hence the operation of the steering wheel becomes easy during vehicular traveling with the upper rotating body facing backward

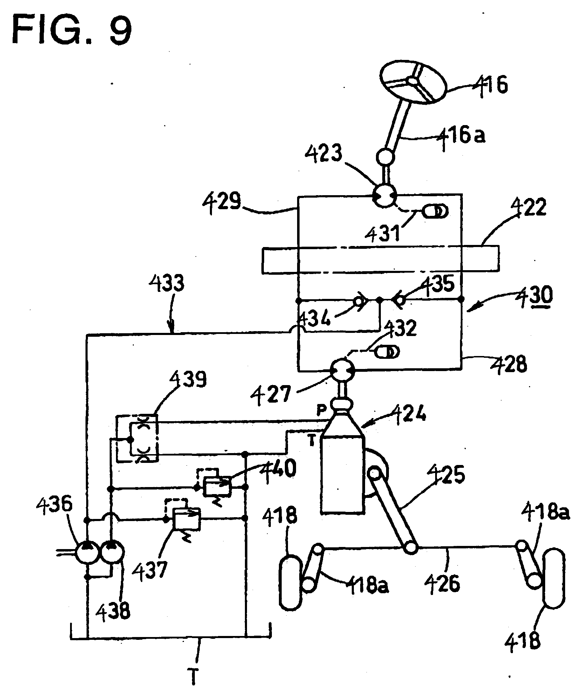

Next, a hydraulic circuit configuration of a steering system according to the fifth embodiment of the present invention will be described below with reference to FIG. 9.

On the upper rotating body side which is an upper side with respect to a rotary joint 422, an upper hydraulic motor 423 is connected to a steering shaft 416a which is rotated by operation of a steering wheel 416.

On the other hand, on a lower travel body side which is a lower side with respect to the rotary joint 422, there is disposed a steering unit 424 of an integral type, which may be another type such as booster type, and a link 425 disposed on an output side of the steering unit 424 is connected to knuckle arms 418a, 418a of right and left front wheels 418, 418 through a tie rod 426.

On an input side of the steering unit 424 is disposed a lower hydraulic motor 427. The lower hydraulic motor 427 and the upper hydraulic motor 423 are connected with each other through oil passages 428 and 429.

A closed circuit 430 is constituted by both motors 423, 427 and the oil passages 428, 429. With a hydraulic pressure of the closed circuit 430, a steering wheel operating force is transmitted to the steering unit 424 to steer the wheels 418, 418.

More specifically, when the steering wheel 416 is operated, the upper hydraulic motor 423 rotates in the turning direction of the steering wheel by an amount corresponding to the amount of rotation of the steering wheel by virtue of a rotating force of the steering shaft 416a, thereby creating a pumping action to discharge oil.

As a result, the lower hydraulic motor 427 rotates by a number of revolutions corresponding to the amount of the discharged oil and actuates the steering unit 424, which in turn exhibits a known toggle joint action, so that an output matching the input is applied to the front wheels 418, 418 via the link 425, tie rod 426 and knuckle arms 418a, whereby the wheels 418, 418 are steered.

After the steering, a rectilinear restoring force applied to the wheels 418, 418 is transmitted to the lower hydraulic motor 427 via a route reverse to the above route and via the steering unit 424, so that the motor 427 in turn exhibits a pumping action and causes the upper hydraulic motor 423 to rotate.

As a result, the wheels 418, 418 return to their rectilinear position and this rectilinear restoring force is applied to the steering wheel 416, which also returns to its neutral position (rectilinear position) automatically.

Since the upper and lower hydraulic motors 423, 427 are disposed on the input side of the steering unit 424, the torque acting on both motors 423, 427 is extremely small, which is about one hundredth of that on the output side.

Therelore, the motors 423, 427 and the oil passages 428, 429 which connect the motors may be of small capacities, that is, the motor rotation resistance and the pipe line resistance can be kept low, so that the transfer loss of the rectilinear restoring force transmitted from the wheels 418, 418 to the steering wheel 416 can be diminished to an extremely small value.

Thus, the rectilinear restoring force is transmitted to the steering wheel 416 without waste, so that the steering wheel 416 is sure to return to its neutral position.

As to the upper and lower hydraulic motors 423, 427, the name "motor" is used in the present invention, but unlike the motor in a narrow sense which is merely rotated by a pump, the sad "motor" indicates a rotary actuator having both pumping function and motor function.

To the upper and lower hydraulic motors 423, 427 are connected motor drain pipes 431 and 432, respectively, through which the oil present in the closed circuit 430 is discharged to the exterior of the system, with the result that the amount of oil present in the closed circuit 430 decreases gradually.

A decrease of oil occurs also due to contraction of oil caused by a drop of oil temperature. If such a decrease of oil is left as it is, there is a fear that the foregoing steering action and rectilinear restoring action may be deteriorated.

To avoid such an inconvenience, an oil replenishing circuit 433 is connected to both-side oil passages 428 and 429 which constitute the closed circuit 430.

The oil replenishing circuit 433 is provided with check valves 434 and 435 which permit the inflow of oil into the oil passages 428 and 429 but block the outflow thereof, and is also provided with an oil replenishing pump 436 which is driven by an engine (not shown). While the engine is in operation, the dosed circuit 430 is pressurized by the oil replenishing circuit 433, and upon decrease in the amount of oil, oil is replenished to ensure the expected steering action and rectilinear restoring action.

In FIG. 9, the numeral 437 denotes a relief valve for the oil replenishing circuit 433 which valve sets a circuit pressure of the oil replenishing circuit.

Numeral 438 denotes a hydraulic pump for the steering unit 424 which pump serves as a hydraulic pressure source for the steering unit. Numeral 439 denotes a flow divider disposed in oil passages which connect both pump and tank ports of the steering unit 424 with the pump 438 and a tank T. Numeral 440 denotes a relief valve which sets a discharge pressure of the pump 438.

According to the fifth embodiment of the present invention, as described above, in a traveling vehicle of an upper rotating type, an upper hydraulic motor which operates in response to operation of the steering wheel is disposed on the upper rotating body side, while a steering unit for changing the steering angle of each wheel and a lower hydraulic motor connected to the steering unit are disposed on a lower travel body side, and both the hydraulic motors are connected together by oil passages through a rotary joint to constitute a closed circuit. Further, a rectilinear restoring force which the wheels undergo during vehicular traveling is transmitted to the steering wheel through the hydraulic pressure m the closed circuit. According to this construction, despite the wheels secured to the lower travel body being operated from the driver's cab formed on the upper rotating body, there is attained an excellent rectilinear restoring performance and the operation of the steering wheel becomes easy.

Thus, even a traveling vehicle of an upper rotating type does not become shaky at the time of changing lane, and the vehicular driver can drive the vehicle with a feeling similar to that in ordinary types of traveling vehicles such as trucks.

Besides, since the upper and lower hydraulic motors are used on the input side of the steering unit which input side is much smaller in torque than the output side, a small motor capacity suffices. Consequently, not only the size of the system can be reduced but also the steering wheel can be surely returned to its neutral position because of a small transfer resistance of the rectilinear restoring force.

It is intended to enhance a rectilinear restoring performance and thereby facilitate operation of a steering wheel. An upper rotating body provided with a driver's cab having a steering wheel 40 is mounted on a lower travel body having wheels 65a and 65b. A steering unit 41 operates in proportion to a steering angle of the steering wheel 40. An upper steering cylinder portion 45 is disposed in the upper rotating body and is actuated by the steering unit 41. A lower steering cylinder portion 57 is disposed in the lower travel body to change the steering angle of wheels 65a and 65b. The upper and lower steering cylinder portions 45, 57 are connected together by oil passages through a rotary joint 73 which is disposed at a rotational center of the upper rotating body, to constitute a closed circuit 100. According to this construction, a rectilinear restoring force which the wheels 65a and 65b undergo during vehicular traveling can be transmitted to the steering wheel 40.

## Claims

1. A steering system in a traveling vehicle including a lower travel body having wheels, an upper rotating body carried on said lower travel body and having a driver's cab provided with a steering wheel, and a steering unit which amplifies an operating force of said steering wheel and transmits the amplified operating force as a steering force to said wheels, said steering system being characterized in that:
(i) said upper rotating body is provided with an upper hydraulic actuator which operates in accordance with operation of said steeling wheel;
(ii) said lower travel body is provided with a lower hydraulic actuator for changing a steering angle of said wheels;
(iii) said upper and lower hydraulic actuators are connected together by oil passages through a rotary joint disposed at a rotational center of said upper rotating body to constitute a closed circuit; and
(iv) a rectilinear restoring force which the wheels undergo during vehicular traveling can be transmitted to said steering wheel by virtue of an oil pressure in said closed circuit and through said steering unit.

2. A steering system in a traveling vehicle according to claim 1, wherein said upper hydraulic actuator is a upper steering cylinder portion and said lower hydraulic actuator is a lower steering cylinder portion.

3. A steering system in a traveling vehicle according to claim 2, wherein at least one of said upper and lower steering cylinder portions is constituted by a double-rod type double acting cylinder.

4. A steering system a traveling vehicle according to claim 2, wherein at least one of said upper and lower steering cylinder portions is constituted by a pair of single-rod type double acting cylinders.

5. A steering system m a traveling vehicle according to claim 2, wherein at least one of said upper and lower steering cylinder portions is constituted by a pair of single-rod type single acting cylinders.

6. A steering system in a traveling vehicle according to any of claims 2 to 5, wherein a reverse steering valve portion for changing over from one combination to another of said interconnected upper and lower steering cylinders is disposed in the oil passages included in said closed circuit.

7. A steering system in a traveling vehicle according to claim 1, including a pressure detecting means connected to said closed circuit and a abnormal condition detecting means which judges that there exists an abnormal condition when said pressure detecting means has detected a predetermined pressure.

8. A steering system m a traveling vehicle according to claim 7, wherein said abnormal condition detecting means is constructed so as to issue an alarm when the detected pressure is below a preset warning reference value.

9. A steering system in a traveling vehicle according to claim 7 or claim 8, including an oil replenishing means for replenishing said closed circuit with oil.

10. A steering system in a traveling vehicle according to claim 9, wherein as said oil replenishing means an oil replenishing circuit is connected to said closed circuit, said oil replenishing circuit including a hydraulic pump for the replenishment of oil and a check valve also for the replenishment of oil which check valve permits only the flow of oil flowing from said hydraulic pump toward said closed circuit.

11. A steering system in a traveling vehicle according to claim 10, wherein an accumulator is connected between said hydraulic pump and said check valve in the oil replenishing circuit.

12. A steering system in a traveling vehicle according to claim 11, wherein an auxiliary check valve for checking the flow of oil flowing from said accumulator side to said hydraulic pump side is disposed upstream of the accumulator in said oil replenishing circuit.

13. A steering system in a traveling vehicle according to claim 11 or claim 12, wherein a control valve adapted to change over between an open position permitting the flow of oil in the oil replenishing circuit and a cut-off position blocking the said oil flow is disposed between said hydraulic pump and said accumulator in the oil replenishing circuit.

14. A steering system in a traveling vehicle according to claim 13, wherein a solenoid valve is used as said control valve, ad said abnormal condition detecting means is constructed so as to set said solenoid valve at said open position when the detected pressure is below a preset oil replenishing reference value.

15. A steering system in traveling vehicle according to any of claims 11 to 14, wherein a restriction is formed on an inlet side of said accumulator in the oil replenishing circuit.

16. A steering system m a traveling vehicle according to claim 1, wherein a neutral reset means for resetting the steering wheel to a neutral position is attached to said steering unit.

17. A steering system in a traveling vehicle according to claim 16, wherein a neutral reset cylinder constituted by a hydraulic cylinder is used as said neutral reset means.

18. A steering system in a traveling vehicle according to claim 17, wherein said neutral reset cylinder is provided with both-side oil chambers connected with each other, free pistons slidably disposed respectively within said both-side oil chambers, and a rod which performs the transfer of force between both said free pistons.

19. A steering system in a traveling vehicle according to any of claims 16 to 18, including a neutral reset valve adapted to change over between a position at which oil chambers in said upper and lower steering cylinder portions are communicated with a tank and a position at which said communication is cut off.

20. A steering system in a traveling vehicle according to claim 19, wherein an electromagnetic change-over valve is used as said neutral reset valve.

21. A steering system in a traveling vehicle according to claim 20, wherein said electromagnetic change-over valve as the neutral reset valve is constructed so as to be actuated by operation of a neutral reset switch which is disposed in the driver's cab.

22. A steering system in a traveling vehicle according to claim 1, wherein said upper hydraulic actuator is a upper hydraulic motor and said lower hydraulic actuator is a lower hydraulic motor.
